# EUROPÄISCHE PATENTANMELDUNG

(11) **EP 1 034 914 A1**
(43) Veröffentlichungstag der Anmeldung: **13.09.2000**
(21) Anmeldenummer: 98110993.7
(22) Anmeldetag: 16.06.1998
(51) Int. Cl.: B29C 67/04

(54) **Verfahren zur Herstellung eines Mehrschicht-Formkörpers**

(71) Anmelder: R. Meiers Söhne AG, 5444 Künten (CH)
(72) Erfinder: Meier, René, 6206 Neuenkirch (CH); Latuner, Richard, 68540 Feldkirch (FR)
(74) Vertreter: Blum, Rudolf Emil Ernst

(57) **Zusammenfassung**

Die vorliegende Erfindung betrifft ein Verfahren zur Herstellung eines Mehrschicht-Formkörpers, sowie die aus dem Verfahren hergestellten Formteile, insbesondere von Sonnenblenden für Automobile.

Durch das erfindungsgemässe Verfahren kann ein Mehrschicht-Formkörper mittels einer einzigen Vorrichtung im Rahmen eines einzigen Verfahrens in hervorragender Qualität erhalten werden.

## Beschreibung

Die vorliegende Erfindung betrifft ein Verfahren zur Herstellung eines Mehrschicht-Formkörpers, sowie die mittels dem Verfahren hergestellten Formteile, insbesondere Sonnenblenden.

Mehrschicht-Formkörper, umfassend ein Formteil aus einem harten Material, sowie mindestens einer Überzugsschicht, beispielsweise mindestens einer Textilschicht, sind insbesondere für eine Vielzahl von Innenaustattungsgegenständen von Bedeutung. In der Möbelindustrie, wie auch in der Automobilindustrie kommen eine ganze Reihe von Formkörper zum Einsatz, welche einerseits formstabil sind und somit einige Belastungen aushalten können, und andererseits aber den ästhetischen Anforderungen entsprechen, welche bei Innenausstattungsgegenständen üblich sind.

Die Herstellung derartiger Mehrschicht-Formkörper wird gemäss dem Stand der Technik üblicherweise in zwei völlig separaten Verfahren mit gänzlich verschiedenen Maschinen vorgenommen. In der Regel wird in einem ersten Verfahren zunächst ein fester Formgegenstand, d.h. ein Rohling bereitgestellt. Dieser kann beliebig transportiert oder gelagert werden, bevor er in einem zweiten Verfahren mit dem gewünschten Überzug versehen wird. In der Regel handelt es sich dabei beim besagten Überzug um einen Stoff- bzw. einen Textil- oder Lederüberzug.

Obwohl mittels der Verfahren gemäss dem Stand der Technik qualitativ durchaus befriedigende Mehrschicht -Formkörper hergestellt werden können, gestalten sich diese Verfahren insgesamt aber als vergleichsweise kostenintensiv. Dies liegt insbesondere daran, dass für jedes der beiden Verfahren, d.h. für die Herstellung des Rohlings gemäss des ersten Verfahrens, sowie für die separate Weiterverarbeitung des Rohlings zugunsten eines Mehrschicht-Formkörpers gemäss dem zweiten Verfahren, eine völlig andere Maschine verwendet wird.

Auch werden an die Überzugsmaschine hohe Anforderungen in bezug auf die Qualität des anzubringenden Überzugs gestellt. Beispielsweise wird bei der Herstellung einer Sonnenblende im Automobilbereich gemäss dem Stand der Technik der nach dem ersten Verfahren erhaltene Rohling im zweiten Verfahren mit dem Stoffüberzug (Kunststoff-Folie, Leder usw.) dergestalt versehen, dass sich der besagte Stoffüberzug exakt der Form des Rohlings anpasst. Ein derartiges Verfahren wird mit einer besonderen und insbesonderen teuren Überzugsmaschine durchgeführt und ist damit vergleichsweise aufwendig.

Es war folglich die Aufgabe der vorliegenden Erfindung ein Verfahren bereitzustellen, bei welchem ein Mehrschicht-Formkörper, bestehend aus einem festen inneren Formteil sowie mindestens einem Stoffüberzug (Kunststoff-Folie, Leder usw.), im Rahmen eines einzigen Verfahrens, mit einer einzigen Maschine erhalten werden kann.

Die obige Aufgabe wurden erfindungsgemäss nach dem Hauptanspruch gelöst. Bevorzugte Ausführungsformen sind in den abhängigen Ansprüchen aufgeführt.

Völlig überraschend hat sich gezeigt, dass es möglich ist einen Mehrschicht-Formkörper aus einem Stoffüberzug (Kunststoff-Folie, Leder usw.) und einem darin befindlichen Formteil im Rahmen eines einzigen Verfahrens mit einer einzigen Maschine zu erhalten.

Das erfindungsgemässe Verfahren zur Herstellung eines Mehrschicht-Formkörpers umfasst die bzw. bsteht dabei aus den folgenden Schritten :
a) Zuerst wird ein Überzugsmaterial mit mindestens einer Öffnung in eine für dieses Verfahren geeignete Maschine, z.B. in einen Formschäumautomat, eingebracht.
b) Anschliessend wird eine definierte Menge eines Füllstoffs bzw. der pulverförmigen bzw. granulierten Füllstoffmischung in mindestens eine der Öffnungen des Überzugsmaterials eingeblasen.
c) Schliesslich wird in der für dieses Verfahren geeigneten Maschine, z.B. dem Formschäumautomat, das mit einem Füllstoff bzw. einer Füllstoffmischung gefüllte Überzugsmaterial mittels Druckplatten (Form) und durch äussere Wärmezufuhr zusammengeschweisst, wobei die gewünschte Formgebung erzielt wird.

Eine für die Durchführung des erfindungsgemässen Verfahrens geeignete Maschine ist insbesondere ein dem Fachmann bekannter Formschäumautomat.

Der verwendete Füllstoff bzw. die Füllstoffmischung muss dabei die Fähigkeit aufweisen unter dem Einfluss von Wärme und Druck zu einem Körper der gewünschten Form zu verschmelzen. In einer bevorzugten Ausführungsform werden als Füllstoff sogenannte Partikelschäume verwendet, welche Perlen mit einer mittleren Korngrösse von ungefähr 0,5 bis 12 mm, vorzugsweise von ungefähr 2 bis 4 mm, aufweisen. Die Partikelschäume können einerseits aus synthetischen Kunststoff-Granulaten wie Polypropylen, Polyethylen, Polystyrol, Polyurethane oder aber aus Naturstoffgranulaten ausgewählt sein.

Naturstoffgranulate sind gegenwärtig wegen ihrer biologischen Abbaubarkeit bzw. ihrer Kompostierbarkeit von grossem Interesse. Ein besonders interessantes Naturstoffgranulat für die Verwendung im Rahmen des erfindungsgemässen Verfahrens ist auf der Grundlage von Alkali-Ligninen und Proteinen hergestellt und beispielsweise in EP-720 634 beschrieben.

Eine weitere Naturstoff-Partikelmasse zur Verwendung im Rahmen des erfindungsgemässen Verfahrens enthält Holzspäne bzw. Holzpulver oder besteht daraus. Da sich allerdings reines Holzpulver nicht durch Erwärmung verfestigen und verformen lässt, ist in diesem Fall noch ein Bindemittel, beispielsweise ein Klebestoff, vorzugsweise ein Hot-Melt erforderlich, welche mit den Holzspänen bzw. Mehl ein homogenes Gemisch als Füllstoff liefert.

In einer Ausführungsform wird ein Gemisch von verschiedenen Partikelschäumen bzw. Naturstoffgranulaten verwendet.

Ein besonders bevorzugter Füllstoff für das erfindungsgemässe Verfahren ist ein Partikelschaum enthaltend oder bestehend aus Polypropylen.

Das Überzugsmaterial ist nicht kritisch. In der Regel werden Stoffüberzüge aus Kunststoff-Folien, Leder, Textilmaterialien usw. mit synthetischen Anteilen bzw. aus natürlicher Wolle verwendet. Geeigneterweise wird das Überzugsmaterial von vornherein in der gewünschten Form, d.h. in einer vorgegebenen Geometrie, bereitgestellt. Es muss allerdings an einer geeigneten Stelle eine Öffnung aufweisen, in welche der Füllstoff eingeblasen werden kann. Im Automobilbereich, beispielsweise bei der Herstellung von Sonnenblenden, weist der Stoffüberzug geeigneterweise die Form eines länglichen Sacks auf, wobei an der Stelle, an welcher später ein Kosmetikspiegel eingesetzt wird, die Einblasöffnung angebracht ist.

In einer bevorzugten Ausführungsform wird ein Formkörper hergestellt, der besonders formfest bzw. steif ist. In diesem Fall ist es erforderlich, dass der Stoffüberzug bündig am verfestigten Formkörper im Inneren des Stoffüberzugs ansitzt. Um dies zu erreichen, wird im erfindungsgemässen Verfahren ein Stoffüberzug verwendet, welcher an seiner Innenseite mit einer Kunstoffschicht, bevorzugt einer Polyethylenschicht, laminiert ist. Somit wird beim Verschweissen gemäss dem Schritt c) ein steifer Verbund zwischen dem Stoffüberzug und dem Füllstoff gebildet. Wird beispielsweise Polypropylen als Füllstoff und ein mit Polyethylen laminierter synthetischer Textilsack als Überzugsmaterial verwendet, entsteht nach dem Verschweissen ein beachtlich steifer Formkörper von grosser Formfestigkeit. Dies ist im wesentlichen der Sandwichstruktur zu verdanken, welche sich aus der Schichtabfolge Füllstoff-Polyethylen-Laminatstoff-Überzugsmaterial ergibt.

Die Wärmezufuhr für das Zusammenschweissen und Formgebung gemäss dem Schritt c) kann gemäss irgendeiner dem Fachmann geläufigen Technik bewerkstelligt werden. Da das Zusammenschweissen gleichzeitig mit der Formgebung einhergeht und daher komprimierbare Formplatten verwendet werden, kann das Zusammenschweissen beispielsweise durch beheizbare Kontakt- bzw. Druckplatten bewerkstelligt werden.

In einer bevorzugten Ausführungsform wird aber das Zusammenschweissen mittels heissem Dampf erreicht, wobei die Temperatur des heissen Dampfes dem verwendeten Füllstoff-Material angepasst ist. Heisser Dampf hat den Vorteil, dass eine reine Oberflächenversiegelung wie sie durch beheizte Kontaktplatten in der Regel auftritt vermieden werden kann. Der heisse Dampf umströmt die Partikelschaum-Perlen und überträgt somit in gleichmässiger Weise die für die vollständige Verschmelzung notwendige Energie im gesamten Füllkörper. Damit wird ein vollständiges Verschmelzen der Partikelschaum-Perlen möglich. Üblicherweise bewegen sich die eingesetzten Dampftemperaturen zwischen 70 bis 160°C. Der Dampf tritt vorzugsweise aus kleinen Düsen in den Kontakt- bzw. Druckplatten (Form) aus, welche auch die Formgebung bewerkstelligen.

Um den gebildeten Mehrschicht-Formkörper aus Füllstoff und Stoffüberzug möglichst rasch zu verfestigen wird in einer besonderen Ausführungsform nach dem Schritt c) noch ein Schritt d) durchgeführt, bei welchem durch dieselben Öffnungen, durch welche der heisse Dampf zum Zusammenschweissen der Füllstoffmischung eingeblasen wurde, kaltes Wasser eingespritzt wird, um so den Zweischicht-Formkörper abzuschrecken.

Um die durch den heissen Verschmelzungsdampf sowie das allfällige Abschreckwasser in den Mehrschicht-Formkörper eingebrachte Feuchtigkeit wieder zu entfernen, wird gegebenenfalls nach Schritt c) oder d) in die für das erfindungsgemässe Verfahren verwendete Maschine, z.B. in den Formschäumautomat, ein Vakuum angelegt. Um die Trocknung noch zu vervollständigen wird anschliessend der Mehrschicht-Formkörper in einen Trocknungsofen gegeben und vorzugsweise während einer Stunde bei einer Temperatur von ungefähr 50-90°C, vorzugsweise von 80°C getrocknet.

Die durch das erfindungsgemässe Verfahren erhaltenen Mehrschicht-Formkörper sind insbesondere für die Automobilindustrie von Interesse, beispielsweise bei der Herstellung von Sonnenblenden, welche einerseits ein geringes Gewicht, andererseits über eine hohe Festigkeit aufweisen sollen. Im Fall der besagten Sonnenblenden, ist es in der Regel ausserdem noch erforderlich zusätzlich in den Formkörper ein Metall- bzw. Kunststoffinsert, d.h. ein Drahtgebilde zur Erhöhung der Festigkeit, und ausserdem ein Scharnier zur Befestigung der Sonnenblende an der Innenseite des Autodachs, einzuarbeiten. In einer bevorzugten Ausführungsform wird das Insert bzw. das Scharnier durch eine weitere Öffnung des Stoffüberzugs vor oder nach einem der Schritte a) bis c) eingeführt.

Ganz besonders bevorzugt wird das Insert, und /oder das Scharnier vor dem Schritt b), d.h. vor dem Einblasen des Füllstoffs in das Überzugsmaterial, z.B. in den Stoffüberzug eingeführt.

Ein weiterer Aspekt der vorliegenden Erfindung sind solche Formkörper, welche nach dem erfindungsgemässen Verfahren erhalten werden. Dies sind Mehrschicht-Formkörper deren Herstellungsverfahren die folgenden Schritte umfasst bzw daraus besteht :
a) Zuerst wird ein Überzugsmaterial mit mindestens einer Öffnung in in eine für dieses Verfahren geeignete Maschine, z.B. in einen Formschäumautomat, eingebracht.
b) Anschliessend wird eine definierte Menge des Füllstoffs bzw. der pulverförmigen bzw. granulierten Füllstoffmischung in mindestens eine der Öffnungen des Überzugsmaterials eingeblasen.
c) Schliesslich wird das mit einem Füllstoff bzw. einer Füllstoffmischung gefüllte Überzugsmaterial mittels Druckplatten (Form) und durch äussere Wärmezufuhr zusammengeschweisst, wobei die gewünschte Formgebung erzielt wird.

In einer ganz besonders bevorzugten Ausführungsform handelt es sich beim erfindungsgemässen Mehrschicht-Formkörper um eine Sonnenblende für Automobile. Dabei wird bevorzugt Polypropylen als Füllstoff, ein laminierter Textilüberzug mit einem Polyethylenfilm an dessen Innenseite verwendet. Ausserdem wird bevorzugt ein Metall- bzw. Kunststoffinsert in Form eines Drahts zur Erhöhung der Festigkeit der Sonnenblende sowie ein Befestigungsscharnier im Inneren der Sonnenblende mit Hilfe einer zweiten Öffnung eingearbeitet.

Im folgenden soll die vorliegende Erfindung anhand von 2 Beispielen näher verdeutlicht werden, wobei dadurch der Schutzbereich nicht als eingeschränkt angesehen werden soll.

### Beispiel 1 (Herstellung einer Sonnenblende)

Ein Polyester-Stoffüberzug in Form eines 35 cm langen und 15 cm breiten Sacks mit einer kleinen Öffnung in welche ein Drahtinsert eingebracht wurde sowie einer 1.5 cm grossen Einblasöffnung wird in einen Formschäumautomat eingeführt.

Anschliessend werden 40 g eines Polypropylen Partikelschaums mit einer mittleren Korngrösse der Partikel-Perlen von 3 mm in die 1.5 cm grosse Einblasöffnung eingeblasen.

Unmittelbar danach wird der angefüllte Sack von zwei Druckflächen in einem Formschäumautomat zum Formkörper zusammengepresst. Dabei weisen beide Druckflächen eine Vielzahl von kleinen Austrittsöffnungen für Wasserdampf auf, aus welchen während 25 Sekunden 130°C heisser Wasserdampf ausgepresst wird und so den Polypropylen-Partikelschaum zum Verschmelzen bringt. Die Einblasöffnung ist dabei so angebracht, dass sich diese unmittelbar an der Kosmetikspiegelmulde der Sonnenblende befindet, so dass diese letztendlich durch den eingebrachten Spiegel verdeckt wird.

Um die Verfestigung zu beschleunigen, wird nach dem Austritt des heissen Wasserdampfs während 15 Sekunden kaltes Wasser von 25°C eingepresst und so der Mehrschicht-Formkörper abgeschreckt. Zum Trocknen und weiteren Verfestigen des Formkörpers wird das erhaltene Produkt schliesslich noch während 4 Sekunden unter Vakuum gehalten und während 1 Stunde bei 80°C in einem Trockenschrank getrocknet. Die erhaltene Sonnenblende ist steif und formstabil, wobei der Stoffüberzug fest an der Füllung ansitzt. Zur Verdeckung der Einblasöffnung wird der Kosmetikspiegel angebracht und somit die fertige, einbaufähige Sonnenblende erhalten.

### Beispiel 2 (Herstellung einer Sitzfläche)

Ein Polyester-Stoffüberzug in Form eines 60 cm langen und 50 cm breiten Sacks mit einer 1.5 cm grossen Einblasöffnung wird in einen Formschäumautomat eingeführt.

Im Formschäumautomat werden dann 800 g eines kompostierbaren Naturstoffgranulats aus Alkali-Lignin und Proteinen der Firma Lignopol mit einer mittleren Korngrösse von 4 mm in die 1.5 cm grosse Einblasöffnung eingeblasen.

Unmittelbar danach wird der angefüllte Sack von zwei beheizten Druckflächen während 60 Sekunden bei einer Temperatur von 140°C zum Formkörper zusammengepresst. Die Einblasöffnung ist dabei so angebracht, dass sie sich an der Sitzunterseite befindet.

Die so erhaltene Sitzfläche, beispielsweise für Tramfahrzeuge des öffentlichen Verkehrs, kann anschliessend unmittelbar weiterverarbeitet werden.

## Patentansprüche

1. Verfahren zur Herstellung eines Mehrschicht-Formkörpers umfassend bzw. bestehend aus den folgenden Schritten :
a) Vorlegen eines Überzugsmaterials mit mindestens einer Öffnung,
b) Einblasen einer definierten Menge des gewünschten Füllstoffs bzw. der pulverförmigen bzw. granulierten Füllstoffmischung in mindestens eine der Öffnungen des Überzugsmaterials,
c) Zusammenschweissen des mit einem Füllstoff bzw. einer Füllstoffmischung gefüllten Überzugsmaterials mittels Druckplatten und durch äussere Wärmezufuhr, wobei die gewünschte Formgebung erzielt wird.

2. Verfahren nach Anspruch 1, dadurch gekennzeichnet, dass der Füllstoff bzw. die Füllstoffmischung ausgewählt ist aus der Gruppe umfassend synthetische Kunststoff-Granulate wie Polypropylen, Polyethylen, Polystyrol, Polyurethane und/oder Naturstoffgranulate und/ oder Holzspäne bzw. Holzpulver.

3. Verfahren nach Anspruch 2, dadurch gekennzeichnet, dass der Füllstoff einen Polypropylen-Partikelschaum enthält oder daraus besteht.

4. Verfahren nach einem der Ansprüche 2 oder 3, dadurch gekennzeichnet, dass der Füllstoff Perlen von einer mittleren Korngrösse von ungefähr 0,5 bis 12 mm, vorzugsweise von ungefähr 2 bis 4 mm, enthält oder daraus besteht.

5. Verfahren nach einem der Ansprüche 1 bis 4, dadurch gekennzeichnet, dass der Stoffüberzug an seiner Innenseite mit einer Kunstoffschicht, bevorzugt einer Polyethylenschicht, laminiert ist und so beim Verschweissen gemäss dem Schritt c) ein steifer Verbund zwischen dem Stoffüberzug und dem Füllstoff entsteht.

6. Verfahren nach einem der Ansprüche 1 bis 5, dadurch gekennzeichnet, dass die Wärmezufuhr für das Zusammenschweissen und Formgebung gemäss Schritt c) mittels heissem Dampf bewerkstelligt wird, bevorzugt einer Temperatur von zwischen 70 bis 160°C.

7. Verfahren nach Anspruch 6, dadurch gekennzeichnet, dass nach dem Schritt c) noch ein Schritt d) durchgeführt wird, bei welchem durch dieselben Öffnungen durch die der heisse Dampf zum Zusammenschweissen der Füllstoffmischung eingeblasen wurde, kaltes Wasser eingespritzt wird, um den Mehrschicht-Formkörper abzuschrecken.

8. Verfahren nach einem der Ansprüche 1 bis 7, dadurch gekennzeichnet, dass der Mehrschicht-Formkörper nach dem Schritt c) bzw. nach dem Abschrecken mit kaltem Wasser im Vakuum getrocknet wird, vorzugsweise bei einer Temperatur von ungefähr 50-90°C.

9. Verfahren nach einem der Ansprüche 1 bis 8, dadurch gekennzeichnet, dass durch eine weitere Öffnung des Stoffüberzugs vor oder nach einem der Schritte a) bis c) ein weiteres Teil, beispielsweise ein Insert, oder ein Scharnier, in den Stoffüberzug eingeführt wird.

10. Verfahren nach einem der Ansprüche 1 bis 9, dadurch gekennzeichnet, dass vor dem Schritt b) ein fester Insert, bzw. ein Scharnier in den Stoffüberzug eingeführt wird.

11. Verfahren nach einem der Ansprüche 1 bis 10, dadurch gekennzeichnet, dass die Schritte a) bis c), sowie gegebenenfalls der Schritt d), in einem Formschäumautomat durchgeführt werden.

12. Formkörper erhältlich nach dem Verfahren gemäss einer der Ansprüche 1 bis 11.

13. Formkörper nach Anspruch 12, dadurch gekennzeichnet, dass er eine Sonnenblende ist.
